# EUROPÄISCHE PATENTSCHRIFT

(11) **EP 1 906 368 B1**
(45) Veröffentlichungstag und Bekanntmachung des Hinweises auf die Patenterteilung: **27.07.2011**
(21) Anmeldenummer: 06020635.6
(22) Anmeldetag: 29.09.2006
(51) Int. Cl.: G08B 13/183

(54) **Optoelektronisches Sicherheitssystem**
Optoelectronic security system
Système de sécurité optoélectronique

(43) Veröffentlichungstag der Anmeldung: 02.04.2008
(73) Patentinhaber: SICK AG, 79183 Waldkirch (DE)
(72) Erfinder: Schmitz, Stephan Dr., 79108 Freiburg (DE)
(74) Vertreter: Manitz, Finsterwald & Partner GbR

(56) Entgegenhaltungen:
- EP-A1- 0 875 873
- DE-A1- 19 608 391
- DE-U1- 29 724 912
- FR-A1- 2 725 817
- US-A- 5 266 810
- US-A1- 2005 017 157

## Beschreibung

Die Erfindung betrifft ein optoelektronisches Sicherheitssystem mit mehreren Lichtsendern in einer Lichtgitteranordnung zur Aussendung von Lichtsignalen in einen Überwachungsbereich, wenigstens einer ortsauflösenden Lichtempfangseinheit zum Empfang der von den Lichtsendern ausgesendeten Lichtsignale und einer Ausleseschaltung zur Auslesung der Signale der wenigstens einen Lichtempfangseinheit. Die Erfindung betrifft weiterhin ein Ausrichtverfahren für ein solches optoelektronisches Sicherheitssystem und ein Verfahren zu dessen Betrieb.

Solche Überwachungseinheiten werden z.B. zur Überwachung gefährlicher Maschinenarbeitsbereiche verwendet. Gelangt ein Objekt in den Überwachungsbereich und damit in den Lichtweg zwischen Lichtgitter und Lichtempfänger, wird ein Objektfeststellungssignal erzeugt, welches beispielsweise zum Abschalten der Maschine oder zum Auslösen eines akustischen oder optischen Warnvorgangs führt.

Als "Objekt" werden im vorliegenden Text nicht nur Gegenstände, sondern auch und insbesondere Körperteile z.B. von Maschinenbedienpersonal bezeichnet.

In EP 0 875 873 B1 ist eine Überwachungseinheit geschildert, bei der ein ortsauflösendes Empfängerelement, z.B. in Form einer Fotodiodenmatrix, verwendet wird. In einem Einlernprozess am Einsatzort wird die Sollposition des von dem Lichtsender am Lichtempfänger erzeugten Lichtflecks eingelernt und abgespeichert. Während des Überwachungsbetriebs wird das Messsignal mit dem abgespeicherten Sollsignal verglichen, um eine Abweichung zu detektieren, wenn sich z.B. ein Objekt im Lichtweg befindet und eine Abschattung bewirkt.

Bei ungünstigen Betriebsbedingungen kann es vorkommen, dass ein Objekt im Überwachungsbereich durch Spiegelungen des Messlichtes an reflektierenden Objekten z.B. im Randbereich des Überwachungsbereichs "umspiegelt" wird und an der Stelle des Lichtempfängers, an dem die Abschattung des Messlichts durch das Objekt auftreten würde, dennoch ein Signal gemessen wird. Um dieser Fehlmessung vorzubeugen, wird bei der bekannten Lösung die gesamte Fläche des ortsauflösenden Detektors ausgelesen, also z.B. bei Verwendung einer Fotodiodenmatrix alle einzelnen Elemente. Durch ortsaufgelösten Vergleich der gesamten Empfängerfläche mit dem erwarteten Signal kann die Gefahr einer Fehldetektion durch Umspiegelung verringert werden.

Insofern ist es bei der bekannten Lösung zur Vermeidung solcher Fehldetektionen notwendig, die gesamte Empfängerfläche, also z.B. alle Fotodioden des Fotodiodenarrays des Empfängers, auszulesen. Dies führt zu einer hohen Auswertezeit.

DE 102 31 178 A1 beschreibt einen optoelektronischen Sensor, bei dem das Licht einer einzelnen Lichtquelle in Richtung eines Reflexionselementes geschickt wird und von dort zu einem Lichtempfänger gelangt. Mit Hilfe einer Schaltermatrix werden die Empfangssignale einzelner Empfangselemente eines Fotodiodenarrays unterschiedlichen Verarbeitungseinrichtungen zugeordnet.

Ein optoelektronisches Sicherheitssystem mit den Merkmalen des Oberbegriffes des Anspruches 1 ist aus EP 0 875 873 B1 bekannt.

Es ist die Aufgabe der vorliegenden Erfindung, ein optoelektronisches Sicherheitssystem, ein Ausrichtverfahren für ein solches optoelektronisches Sicherheitssystem und ein Verfahren zu dessen Betrieb anzugeben, die eine schnelle Auswertung bei hoher Empfindlichkeit und Sicherheit ermöglichen.

Diese Aufgabe wird mit einem optoelektronischen Sicherheitssystem mit den Merkmalen des Anspruchs 1, ein Ausrichtverfahren für ein erfindungsgemäßes optoelektronisches Sicherheitssystem mit den Merkmalen des Anspruchs 10 und ein Verfahren zum Betreiben eines erfindungsgemäßen optoelektronischen Sicherheitssystems mit den Merkmalen des Anspruchs 14 gelöst. Unteransprüche sind auf bevorzugte Ausgestaltungen gerichtet.

Ein erfindungsgemäßes optoelektronisches Sicherheitssystem zeichnet sich durch eine Auswerteeinrichtung aus, die ausgestaltet ist, die Fläche der wenigstens einen Lichtempfangseinheit in Abhängigkeit eines vorbestimmten Auswahlkriteriums in wenigstens zwei Verarbeitungsbereiche aufzuteilen und die Signale der wenigstens zwei Verarbeitungsbereiche unterschiedlich weiterzuverarbeiten. Damit ist es möglich, dass unterschiedliche Bereiche der Lichtempfangseinheit unterschiedlich behandelt werden. Signale aus einem Empfängerbereich, in dem ein Lichtsignal von einer Lichtsendeeinheit erwartet wird, können z.B. anders ausgewertet werden, als Signale aus Bereichen der Empfangseinheit, an denen im Regelfall kein Signal erwartet werden würde. So ist es z.B. möglich, die Auswertegenauigkeit unterschiedlich festzulegen. Mögliche Auswahlkriterien sind z.B. die erwartete Position eines Lichtflecks, der Rand eines erwarteten Lichtflecks, die Größe eines erwarteten Lichtflecks oder aufgrund der Einsatzbedingungen als besonders kritisch anzusehende Empfangsbereiche. Die Auswerteeinheit kann zum Beispiel einen Mikroprozessor oder eine entsprechend angepasste ASIC-Baueinheit umfassen.

Durch die Auswahl unterschiedlich weiterzuverarbeitender Empfangsbereiche kann der Auswerteaufwand an die Gegebenheiten angepasst und optimiert werden.

Eine erfindungsgemäß zu verwendende ortsauflösende Lichtempfangseinheit kann z.B. eine ein- oder zweidimensionale Fotodiodenmatrix umfassen, die vorzugsweise mit CCD-Elementen in Matrixanordnung ausgestaltet ist. Die Ausleseschaltung ist dann mit den einzelnen Elementen der Fotodiodenmatrix verbunden. Bei einer vorteilhaften Weiterbildung ist die Auswerteeinrichtung derart ausgestaltet, dass sie die einzelnen Elemente der Fotodiodenmatrix je nach dem vorbestimmten Auswahlkriterium den unterschiedlichen Verarbeitungsbereichen zuordnet.

Bei einer solchen Ausgestaltung weist die Auswerteeinrichtung vorteilhafterweise eine Summiereinheit auf, die die Signale der einem Verarbeitungsbereich zugeordneten Elemente der Fotodiodenmatrix zu einem Bereichssignal addieren kann. Mit einer solchen Ausführungsform werden die Signale der einzelnen Verarbeitungsbereiche also jeweils zu einem Bereichssignal zusammengefasst, so dass sich die Anzahl der auszuwertenden Signale signifikant verringert und insofern eine starke Verkürzung der Auswertezeit resultiert. Insbesondere werden z.B. die Stromsignale der einem Verarbeitungsbereich zugeordneten Fotodioden der Fotodiodenmatrix zu einem das Bereichssignal bildenden Gesamtstrom addiert. Die Weiterverarbeitung der Bereichssignale z.B. durch Vergleich mit anderen Bereichssignalen, ist zudem sehr viel einfacher und sicherer als die Weiterverarbeitung der Signale einzelner Fotodiodenelemente, da die Bereichssignale eine größere absolute Größe haben.

Bei einer anderen Ausführungsform umfasst die wenigstens eine Lichtempfangseinheit des erfindungsgemäßen optoelektronischen Sicherheitssystems einen positionssensitiven Detektor (PSD). Ein solches PSD-Element ist ein elektrooptisches Element mit einer lichtempfindlichen Fläche, wobei der Detektor beispielsweise zwei Ströme liefert, aus deren Amplitudenverhältnis auf die auf eine Dimension bezogene Position eines Lichtflecks auf der lichtempfindlichen Fläche des PSD geschlossen wird. Für eine solche Ausführungsform ist die Auswerteeinrichtung vorteilhafterweise mit einer Addier-/Integriereinheit ausgestattet, die das Signal eines Verarbeitungsbereichs über dessen Fläche zu einem Bereichssignal addieren/integrieren kann. Auch bei dieser Ausführungsform werden also Bereichssignale gebildet, die eine einfache Weiterverarbeitung ermöglichen.

Bei Ausführungsformen, die eine Auswerteeinrichtung zur Bildung von Bereichssignalen umfassen, kann die Auswerteeinrichtung vorteilhafterweise eine Vergleichseinrichtung aufweisen, um die Bereichssignale einzelner Verarbeitungsbereiche miteinander zu vergleichen. Aus dem Vergleichsergebnis kann dann sicher auf eine Abweichung von einem erwarteten Sollwert für diesen Vergleich geschlossen werden. Bei einer Abweichung kann von der Auswerteeinrichtung dann z.B. ein Warnsignal ausgegeben oder eine Maschine gestoppt werden.

Gegebenenfalls können die Bereichssignale unterschiedlicher Verarbeitungsbereiche mit unterschiedlichen Wichtungsfaktoren behandelt werden, um eine optimale Anpassung an die jeweiligen Betriebsbedingungen zu ermöglichen.

Das erfindungsgemäße optoelektronische Sicherheitssystem weist eine Mehrzahl von Lichtsendern auf, um einen räumlich ausgedehnten Überwachungsbereich zu gewährleisten. Eine Ausgestaltung weist zu jedem Lichtsender eine korrespondierende ortsauflösende Lichtempfangseinheit auf, die mit einer erfindungsgemäß ausgestalteten Auswerteeinrichtung zur Bildung von jeweils wenigstens zwei Verarbeitungsbereichen ausgestattet sind. Alternativ kann eine Auswerteeinrichtung zur Auswertung aller ortsauflösenden Lichtempfangseinheiten verwendet werden.

Bei einer anderen Ausführungsform ist eine gemeinsame ortsauflösende Lichtempfangseinheit vorgesehen, die die Lichtflecken vorzugsweise aller Lichtsender der Lichtgitteranordnung detektieren kann.

Ein erfindungsgemäßes Ausrichtverfahren dient der Ausrichtung eines erfindungsgemäßen optoelektronischen Sicherheitssystems während einer Ausrichtphase, also insbesondere nach dessen Installation am zu sichernden Überwachungsbereich.

Ohne Störobjekte im Überwachungsbereich werden dabei Lichtsignale der Lichtsender der Lichtgitteranordnung in den Überwachungsbereich geschickt. In Abhängigkeit der Position und/oder der Form und/oder der Fläche der an der Lichtempfangseinheit bzw. den Lichtempfangseinheiten empfangenen Lichtsignale werden unterschiedliche Verarbeitungsbereiche an der jeweiligen Lichtempfangseinheit festgelegt.

Insbesondere können z.B. solche Teile einer ortsauflösenden Lichtempfangseinheit einem gemeinsamen Verarbeitungsbereich zugeordnet werden, die von einem Lichtsignal einer Lichtsendeeinheit getroffen werden. Die übrigen Teile der jeweiligen Lichtempfangseinheit werden z.B. zu einem zweiten Verarbeitungsbereich zusammengefasst.

Eine andere Ausgestaltung des Ausrichtverfahrens sieht z.B. vor, dass solche Teile einer Lichtempfangseinheit einem gemeinsamen Verarbeitungsbereich zugeordnet werden, die ein Lichtsignal einer Lichtsendeeinheit umgeben bzw. begrenzen.

Bei einer anderen Ausgestaltung werden die Verarbeitungsbereiche derart gewählt, dass sie unterschiedlichen Akzeptanzwinkeln der Lichtempfangseinheit entsprechen, insbesondere also ein Verarbeitungsbereich Teil eines anderen Verarbeitungsbereiches ist. Wenn bei der Überwachung dann zwischen den unterschiedlichen Verarbeitungsbereichen umgeschaltet wird, kann der Akzeptanzwinkel der Lichtempfangseinheit je nach Anforderung ausgewählt werden. So kann z.B. ein Verarbeitungsbereich mit einer größeren Fläche gewählt werden, die einem Akzeptanzwinkel von z.B. 5 Grad entspricht, während ein anderer, kleinerer Verarbeitungsbereich derart gewählt wird, dass er einem Akzeptanzwinkel von 2,5 Grad entspricht.

Ein erfindungsgemäßes Überwachungsverfahren wird mit einem erfindungsgemäßen optoelektronischen Sicherheitssystem durchgeführt, das mit einem erfindungsgemäßen Ausrichtverfahren ausgerichtet wurde. In der Überwachungsphase werden mit den Lichtsendern Lichtsignale in den Überwachungsbereich in Richtung der wenigstens einen ortsauflösenden Lichtempfangseinheit gesendet. Die Signale der während der Ausrichtphase mit dem erfindungsgemäßen Ausrichtverfahren festgelegten Verarbeitungsbereiche werden verwendet, um festzustellen, ob im Überwachungsbereich ein Objekt ist oder nicht.

Bei einer vorteilhaften Ausgestaltung des erfindungsgemäßen Verfahrens werden die Lichtsignale aus jeweils einem Verarbeitungsbereich summiert oder über die Fläche des jeweiligen Verarbeitungsbereiches integriert, um ein Bereichssignal des jeweiligen Verarbeitungsbereichs zu bilden. Die so gebildeten Bereichssignale einzelner Verarbeitungsbereiche können dann z.B. verglichen werden. Bei anderen Ausgestaltungen werden Verhältnisse oder Differenzen der Bereichssignale einzelner Verarbeitungsbereiche zur Auswertung gebildet. Gegebenenfalls können vor der Differenzbildung oder der Verhältnisbildung die Bereichssignale unterschiedlich gewichtet werden.

Die Erfindung umfasst auch Ausgestaltungen des Systems und der Verfahren, bei denen ein Verarbeitungsbereich ganz oder teilweise Teil eines anderen Verarbeitungsbereiches ist.

Die Erfindung wird anhand der beiliegenden Figuren im Detail erläutert.
- Fig. 1: zeigt in schematischer Darstellung ein erfindungsgemäßes Sicherheitssystem und
- Fig. 2: zeigt in schematischer Darstellung eine ortsauflösende Lichtempfangseinheit während des Betriebs eines erfindungsgemäßen optoelektronischen Sicherheitssystems.

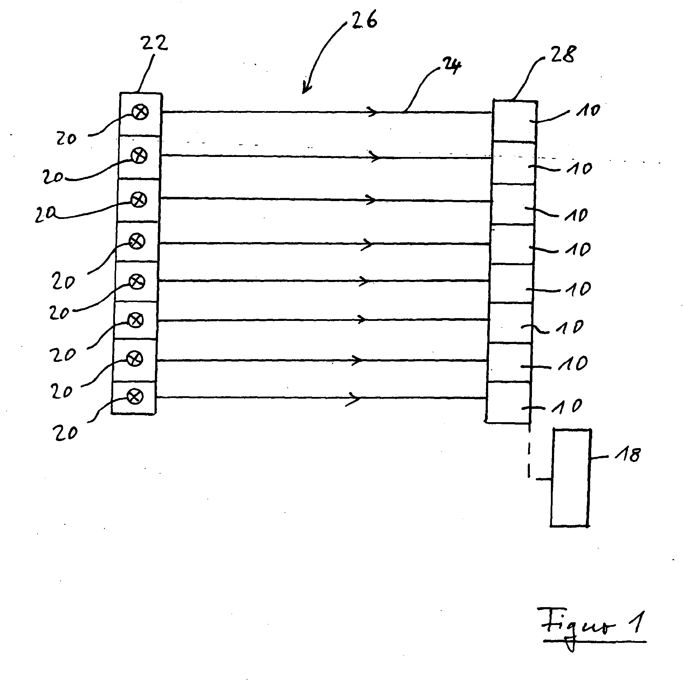

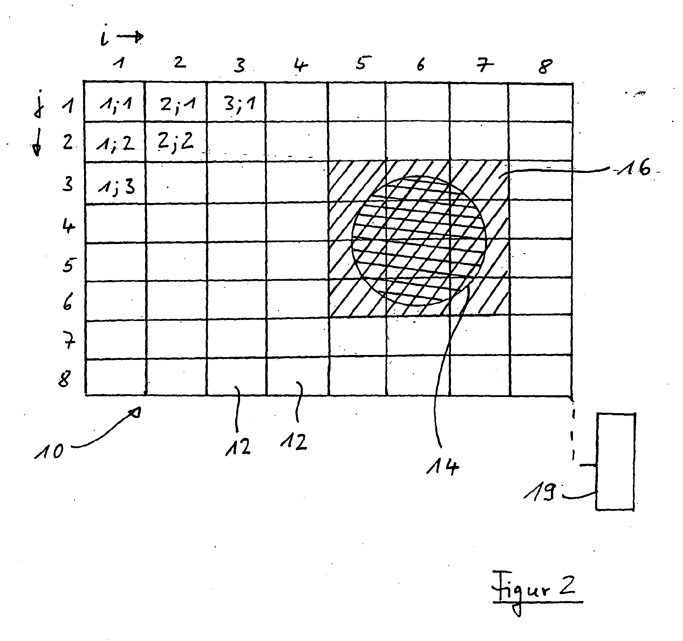

Fig. 1 zeigt eine erfindungsgemäße Lichtgitteranordnung. In einem Lichtsendemodul 22 sind mehrere Lichtquellen, z.B. Leuchtdioden 20 angeordnet. Entsprechende Optiken bilden von den Leuchtdioden ausgesendete Lichtstrahlen 24 in Richtung der Empfängereinheiten 10 eines Empfängermoduls 28 ab. Ein ausgedehnter Bereich 26 wird auf diese Weise überwacht. Die einzelnen Lichtempfangseinheiten 10 sind ortsauflösende Lichtempfangseinheiten, wie sie im Folgenden mit Bezug zu Fig. 2 beschrieben werden.

Fig. 2 zeigt eine matrixförmige Anordnung von einzelnen Fotodiodenelementen 12, von denen nur zwei beispielhaft mit Bezugsziffern versehen sind.

Zur einfacheren Identifizierung sind die einzelnen Fotodiodenelemente 12 mit Indizes (i; j) gekennzeichnet. Sowohl in der waagerechten Richtung als auch in der senkrechten Richtung sind im gezeigten Beispiel Reihen von acht Fotodiodenelementen vorgesehen. Gezeigt ist eine Anordnung mit rechteckförmigen Fotodiodenelementen, wobei auch andere Formen, z.B. quadratische Elemente möglich sind. Die Fotodiodenfläche ist als 8 x 8 Matrix ausgelegt. Die Erfindung ist jedoch nicht auf dieses Maß beschränkt.

Eine einer Leuchtdiode 20 entsprechende und in Fig. 2 nicht sichtbare Lichtsendeeinheit sendet ein Lichtsignal in Richtung der Lichtempfangseinheit 10, das einen Lichtfleck 14 auf der Lichtempfangseinheit bildet. In noch zu erläuternder Weise werden während einer Ausrichtphase die Diodenelemente, die in dem Bereich 16 liegen, zu einem Verarbeitungsbereich zusammengefasst. Zur Auslesung und Auswertung sind die Fotodiodenelemente 12 mit einer individuellen Auslese- und Auswerteeinrichtung 19 verbunden, die im Folgenden der Einfachheit halber als Auswerteeinrichtung bezeichnet wird und Teil der in Fig. 1 gezeigten Gesamtauswerteeinrichtung 18 ist.

Die optoelektronische Überwachungseinheit wird derart installiert, dass Licht von der Lichtgitteranordnung 22 durch den Überwachungsbereich 26 zu der Lichtempfangseinheit 28 gesendet werden kann. Dabei kann die Lichtempfangseinheit 22 wie dargestellt auf der gegenüberliegenden Seite des Überwachungsbereichs 26 angeordnet sein oder auf derselben Seite wie die Lichtgitteranordnung, wenn das Überwachungslicht auf der gegenüberliegenden Seite des Überwachungsbereichs von einem Reflektor reflektiert wird.

Während einer Ausrichtphase wird ohne Störobjekte im Überwachungsbereich 26 das Licht der Lichtgitteranordnung auf die ortsauflösenden Lichtempfangseinheiten 10 abgebildet. Dies ist in Fig. 2 am Beispiel einer der Lichtempfangseinheiten 10 gezeigt. Dargestellt ist der kreisförmige Lichtfleck 14 auf dem als Lichtempfängereinheit dienenden Fotodiodenarray 10. Während der Ausrichtphase legt die Auswerteeinheit 18 fest, welche Fotodioden 12 welchem Verarbeitungsbereich zugeordnet werden. Im gezeigten Beispiel wird als Auswahlkriterium gewählt, ob die entsprechenden Fotodiodenelemente von dem Lichtfleck 14 getroffen werden oder nicht. Die Auswerteeinheit 18 ordnet die von dem Lichtfleck 14 getroffenen Fotodioden einem ersten Verarbeitungsbereich 16 zu, der schraffiert dargestellt ist. Zu diesem Verarbeitungsbereich gehören bei dem gezeigten Beispiel dementsprechend die Fotodioden mit den Indizes (5; 3) bis (7; 6). Die übrigen in Fig. 2 nicht schraffiert dargestellten Fotodioden 12 werden einem zweiten Verarbeitungsbereich zugeordnet.

Die Signale des Verarbeitungsbereichs 16 werden addiert und in der Auswerteeinrichtung 18 einem gemeinsamen Verstärker zugeführt. Die Signale der übrigen Fotodioden werden ebenfalls addiert und einem zweiten Verstärker zugeführt. Die in diesen Verstärkern verstärkten Signale werden z.B. ins Verhältnis gesetzt. Auf diese Weise wird ein Wert festgelegt, der im Überwachungsbetrieb als Referenz dient.

Während des Überwachungsbetriebs werden die Signale der während der Ausrichtphase festgelegten Verarbeitungsbereiche ausgelesen und in gleicher Weise addiert und ins Verhältnis gesetzt. Eine Abweichung von den während der Ausrichtphase festgestellten Werten deutet auf ein Objekt im Überwachungsbereich hin.

Bei einer anderen Ausgestaltung werden z.B. nur diejenigen Fotodioden ausgelesen, die vom Rand des Lichtflecks 14 getroffen werden, im gezeigten Beispiel also die Fotodioden mit den Indizes (5; 3), (6; 3), (7; 3), (5; 4), (7; 4), (5; 5), (7; 5), (5; 6), (6; 6), (7; 6).

Bei einer einfacheren Verfahrensführung werden nur die Signale eines Verarbeitungsbereichs verwertet, also zum Beispiel der Fotodioden, die während der Ausrichtphase vom Lichtfleck getroffen wurden.

Bei einer weiteren Ausgestaltung wird die Größe des empfangenen Lichtflecks mit einer während der Ausrichtphase ermittelten erwarteten Lichtfleckgröße verglichen.

Zur Erhöhung der Sicherheit kann der Verarbeitungsbereich, der einer gemeinsamen Auswertung zugeführt wird, auch größer um den Lichtfleck herum gewählt werden, um leichte Verschiebungen zu tolerieren. Zum Beispiel können bei der Anordnung der Fig. 2 auch alle Fotodioden mit den Indizes von (4; 2) bis (8; 7) einem gemeinsamen Verarbeitungsbereich zugeordnet werden.

Bei der gezeigten Ausführungsform werden in der Ausrichtphase die Lichtsignale der einzelnen Leuchtdioden 20 auf die jeweils korrespondierenden ortsauflösenden Lichtempfangseinheiten 10 abgebildet und jeweils in beschriebener Weise Verarbeitungsbereiche festgelegt.

Alternativ kann vorgesehen sein, dass das Empfängermodul 28 nicht mehrere ortsauflösende Lichtempfangseinheiten 10 umfasst, sondern aus einer Lichtempfangseinheit aufgebaut ist, die die Lichtflecke mehrerer Leuchtdioden 20 empfangen kann. Bei einer solchen Ausgestaltung werden z.B. diejenigen Fotodioden des gesamten Empfängermoduls 28 zu einem Verarbeitungsbereich zusammengefasst, die von den Lichtflecken der Leuchtdioden 20 getroffen werden.

Die individuellen Auswerteeinheiten 19 bzw. die Gesamtauswerteeinheit 18 können z.B. einen Mikroprozessor bzw. eine entsprechend ausgestaltete ASIC-Baueinheit umfassen.

Es ist auch möglich, dass die Verarbeitungsbereiche derart gewählt werden, dass ein Verarbeitungsbereich Teil eines anderen Verarbeitungsbereiches ist. So können verschiedene Akzeptanzbereiche der Lichtempfangseinheit definiert werden. So kann z.B. ein erster Verarbeitungsbereich einem Akzeptanzwinkel von 5 Grad entsprechen, während ein zweiter Verarbeitungsbereich einem Akzeptanzwinkel von 2,5 Grad entspricht und gegebenenfalls Teil des ersten Verarbeitungsbereiches ist. Je nach Anforderung kann auf diese Weise auch eine größere oder kleinere Genauigkeit des Sicherheitssystems eingestellt werden.

Durch die Zusammenfassung einzelner Teile der ortsauflösenden Lichtempfangseinheit ist der Auswerteaufwand bei dem erfindungsgemäßen optoelektronischen Sicherheitssystem signifikant verringert. So sind z.B. bei Verwendung von zwei unterschiedlichen Verarbeitungsbereichen nur zwei Verstärker für die Weiterverarbeitung notwendig.

Das erfindungsgemäße System zeichnet sich durch sehr große Flexibilität und optimale Anpassbarkeit an die jeweilige Anwendung und die jeweiligen Sicherheitsanforderungen aus.

### Bezugszeichenliste

- 10: Lichtempfangseinheit
- 12: Fotodiode
- 14: Lichtfleck
- 16: erster Verarbeitungsbereich
- 18: Gesamtauslese- und auswerteeinheit
- 19: individuelle Auslese- und Auswerteeinheit
- 20: Leuchtdiode
- 22: Lichtsendemodul
- 24: Lichtstrahl
- 26: Überwachungsbereich
- 28: Empfängermodul

## Patentansprüche

1. Optoelektronisches Sicherheitssystem zur Objektfeststellung in einem Überwachungsbereich mit
- mehreren Lichtsendern (20) in einer Lichtgitteranordnung (22) zur Aussendung von Lichtsignalen (24) in einen Überwachungsbereich (26),
- wenigstens einer ortsauflösenden Lichtempfangseinheit (10) zum Empfang der von den Lichtsendern (20) ausgesendeten Lichtsignale (24), und
- einer Ausleseschaltung (18, 19) zur Auslesung der Signale der wenigstens einen Lichtempfangseinheit (10),
**gekennzeichnet durch**
eine Auswerteeinrichtung (18, 19), die ausgestaltet ist, die Fläche der wenigstens einen Lichtempfangseinheit (10) in Abhängigkeit eines vorbestimmten Auswahlkriteriums in wenigstens zwei Verarbeitungsbereiche (16) aufzuteilen und die Signale der wenigstens zwei Verarbeitungsbereiche unterschiedlich weiterzuverarbeiten.

2. Optoelektronisches Sicherheitssystem nach Anspruch 1, **dadurch gekennzeichnet, dass**
- die wenigstens eine ortsauflösende Lichtempfangseinheit eine ein- oder zweidimensionale Fotodiodenmatrix (10) mit in Matrixform angeordneten lichtempfindlichen Elementen (12), insbesondere CCD-Elementen, umfasst, und
- die Ausleseschaltung mit-den einzelnen Elementen (12) der Fotodiodenmatrix (10) zur Auslesung der Signale der Elemente verbunden ist.

3. Optoelektronisches Sicherheitssystem nach Anspruch 2, **dadurch gekennzeichnet, dass** die Auswerteeinrichtung (18, 30) derart ausgestaltet ist, dass sie einzelne Elemente (12) der Fotodiodenmatrix (10) unterschiedlichen Verarbeitungsbereichen (16) zuordnen kann.

4. Optoelektronisches Sicherheitssystem nach Anspruch 3, **dadurch gekennzeichnet, dass** die Auswerteeinheit (18, 30) eine Summiereinheit umfasst, die die Signale der einem Verarbeitungsbereich (16) zugeordneten Elemente (12) der Fotodiodenmatrix (10) zu einem Bereichssignal, insbesondere den Strom der einzelnen Fotodioden des Verarbeitungsbereiches zu einem Gesamtstrom, addieren kann.

5. Optoelektronisches Sicherheitssystem nach Anspruch 1, **dadurch gekennzeichnet, dass** die wenigstens eine ortsauflösende Lichtempfangseinheit einen positionssensitiven Detektor umfasst.

6. Optoelektronisches Sicherheitssystem nach Anspruch 5, **dadurch gekennzeichnet, dass** die Auswerteeinheit eine Addier-/ Integriereinheit umfasst, die das Signal eines Verarbeitungsbereiches über die Fläche des Verarbeitungsbereiches zu einem Bereichssignal addieren/integrieren kann.

7. Optoelektronisches Sicherheitssystem nach einem der Ansprüche 4 oder 6, **dadurch gekennzeichnet**, das die Auswerteeinheit (18, 30) eine Vergleichseinrichtung zum Vergleich der Bereichssignale einzelner Verarbeitungsbereiche miteinander umfasst.

8. Optoelektronisches Sicherheitssystem nach einem der Ansprüche 1 bis 7, **dadurch gekennzeichnet**, das jedem Lichtsender (20) der Lichtgitteranordnung (22) eine eigene ortsauflösende Lichtempfangseinheit (10) zugeordnet ist.

9. Optoelektronisches Sicherheitssystem nach einem der Ansprüche 1 bis 7, **dadurch gekennzeichnet, dass** mehreren, vorzugsweise allen, Lichtsendern der Lichtgitteranordnung eine gemeinsame ortsauflösende Lichtempfangseinheit zugeordnet ist.

10. Ausrichtverfahren für ein optoelektronisches Sicherheitssystem gemäß einem der Ansprüche 1 bis 9, bei dem während einer Ausrichtphase mit den Lichtsendern (20) der Lichtgitteranordnung (22) ohne Störobjekte im Überwachungsbereich (26) Lichtsignale (24) zu der wenigstens einen Lichtempfangseinheit (10) gesendet werden und in Abhängigkeit eines vorbestimmten Auswahlkriteriums - insbesondere der Position und/oder der Form und/oder der Fläche der an der Lichtempfangseinheit (10) empfangenen Lichtsignale - unterschiedliche Verarbeitungsbereiche festgelegt werden.

11. Ausrichtverfahren nach Anspruch 10, bei dem wenigstens solche Teile einer ortsauflösenden Lichtempfangseinheit (10) einem gemeinsamen Verarbeitungsbereich (16) zugeordnet werden, die von einem Lichtsignal (14) einer Lichtsendeeinheit getroffen werden.

12. Ausrichtverfahren nach Anspruch 10, bei dem wenigstens solche Teile einer ortsauflösenden Lichtempfangseinheit einem gemeinsamen Verarbeitungsbereich zugeordnet werden, die ein von einer Lichtsendeeinheit empfangenes Lichtsignal umgeben oder begrenzen.

13. Ausrichtverfahren nach einem der Ansprüche 10 bis 12, bei dem unterschiedliche Verarbeitungsbereiche derart festgelegt werden, dass sie unterschiedlichen Akzeptanzwinkeln der wenigstens einen Lichtempfangseinheit (10) entsprechen.

14. Verfahren zum Betreiben eines optoelektronischen Sicherheitssystems gemäß einem der Ansprüche 1 bis 9, das mit einem Ausrichtverfahren gemäß einem der Ansprüche 10 bis 13 ausgerichtet wurde, bei dem während einer Überwachungsphase mit den Lichtsendem (20) der Lichtgitteranordnung (22) Lichtsignale (24) in den Überwachungsbereich (26) zu der wenigstens einen ortsauflösenden Lichtempfangseinheit (10) gesendet werden.

15. Verfahren nach Anspruch 14, bei dem die Lichtsignale aus einem Verarbeitungsbereich summiert oder integriert werden um ein Bereichssignal des jeweiligen Verarbeitungsbereiches (16) zu bilden.

16. Verfahren nach Anspruch 15, bei dem die Bereichssignale einzelner Verarbeitungsbereiche (16) verglichen werden.

17. Verfahren nach einem der Ansprüche 15 oder 16, bei dem Verhältnisse oder Differenzen der Bereichssignale einzelner Verarbeitungsbereiche (16) gebildet werden.

18. Verfahren nach Anspruch 17, bei dem die Bereichssignale vor der Verhältnisbildung beziehungsweise der Differenzbildung gewichtet werden.

19. Verfahren nach einem der Ansprüche 14 bis 18, bei dem die Fläche des Lichtfleckes an der wenigstens einen Lichtempfangseinheit (10) überwacht wird, der durch das Auftreffen eines Lichtsignales (24) erzeugt wird.

20. Verfahren nach einem der Ansprüche 14 bis 19, bei dem Verarbeitungsbereiche, die unterschiedlichen Akzeptanzwinkeln der wenigstens einen Lichtempfangseinheit (10) entsprechen, überwacht werden.

## Claims

1. An optoelectronic security system for object detection in a monitored zone comprising
- a plurality of light transmitters (20) in a light grid arrangement (22) for the transmission of light signals (24) into a monitored zone (26);
- at least one spatially resolving light reception unit (10) for the reception of the light signals (24) transmitted by the light transmitters (20); and
- a read-out circuit (18, 19) for the reading out of the signals of the at least one light reception unit (10),
**characterized by**
an evaluation device (18, 19) which is designed to split the surface of the at least one light reception unit (10) into at least two processing regions (16) in dependence on a predetermined selection criterion and to further process the signals of the at least two processing regions differently.

2. An optoelectronic security system in accordance with claim 1, **characterized in that**
- the at least one spatially resolving light reception unit includes a one-dimensional or two-dimensional photodiode matrix (10) with light-sensitive elements (12), in particular CCD elements, arranged in matrix form; and
- the read-out circuit is connected to the individual elements (12) of the photodiode matrix (10) for the reading out of the signals of the elements.

3. An optoelectronic security system in accordance with claim 2, **characterized in that** the evaluation unit (18, 30) is designed such that it can associate individual elements (12) of the photodiode matrix (10) with different processing regions (16).

4. An optoelectronic security system in accordance with claim 3, **characterized in that** the evaluation unit (18, 30) includes a summing unit which can add the signals of the elements (12) of the photodiode matrix (10) associated with a processing region (16) to a region signal, in particular the current of the individual photodiodes of the processing region to a total current.

5. An optoelectronic security system in accordance with claim 1, **characterized in that** the at least one spatially resolving light reception unit includes a position-sensitive detector.

6. An optoelectronic security system in accordance with claim 5, **characterized in that** the evaluation unit includes an adding/integrating unit which can add/integrate the signal of a processing region over the surface of the processing region to a region signal.

7. An optoelectronic security system in accordance with one of the claims 4 or 6, **characterized in that** the evaluation unit (18, 30) includes a comparator device for the comparison of the region signals of individual processing regions with one another.

8. An optoelectronic security system in accordance with any one of the claims 1 to 7, **characterized in that** a separate spatially resolving light reception unit (10) is associated with each light transmitter (20) of the light grid arrangement (22).

9. An optoelectronic security system in accordance with any one of the claims 1 to 7, **characterized in that** a common spatially resolving light reception unit is associated with a plurality of light transmitters, preferably all of the light transmitters of the light grid arrangement.

10. An alignment method for an optoelectronic security system in accordance with any one of the claims 1 to 9, wherein light signals (24) are transmitted to the at least one light reception unit (10) during an alignment phase with the light transmitters (20) of the light grid arrangement (22) without interference objects in the monitored zone (26) and different processing regions are fixed in dependence on a predetermined selection criterion - in particular the position and/or the shape and/or the surface of the light signals received at the light reception unit (10).

11. An alignment method in accordance with claim 10, wherein such parts of a spatially resolving light reception unit (10) are associated with a common processing region (16) on which a light signal (14) of a light transmission unit is incident.

12. An alignment method in accordance with claim 10, wherein at least such parts of a spatially resolving light receiver unit are associated with a common processing region which surround or bound a light signal received by a light transmission unit.

13. An alignment method in accordance with any one of claims 10 to 12, wherein different processing regions are fixed such that they correspond to different acceptance angles of the at least one light reception unit (10).

14. A method of operating an optoelectronic security system in accordance with any one of the claims 1 to 9 which was aligned using an alignment method in accordance with any one of the claims 10 to 13, wherein light signals (24) are transmitted into the monitored zone (26) to the at least one spatially resolving light reception unit (10) during a monitoring phase by the light transmitters (20) of the light grid arrangement (22).

15. A method in accordance with claim 14, wherein the light signals from a processing region are summed or integrated to form a region signal of the respective processing region (16).

16. A method in accordance with claim 15, wherein the region signals of individual processing regions (16) are compared.

17. A method in accordance with one of the claims 15 or 16, wherein relationships or differences of the region signals of individual processing regions (16) are formed.

18. A method in accordance with claim 17, wherein the region signals are weighted before the relationship formation or before the difference formation.

19. A method in accordance with any one of the claims 14 to 18, wherein the surface of the light spot is monitored at the at least one light reception unit (10), said light spot being generated by the incidence of a light signal (24).

20. A method in accordance with any one of the claims 14 to 19, wherein processing regions corresponding to different acceptance angles of the at least one light reception unit (10) are monitored.

## Revendications

1. Système de sécurité optoélectronique pour la constatation d'objets dans une zone de surveillance, comprenant :
- plusieurs émetteurs de lumière (20) dans un agencement en grille lumineuse (22) pour émettre des signaux lumineux (24) dans une zone de surveillance (26),
- au moins une unité réceptrice de lumière (10) à résolution locale pour la réception des signaux lumineux (24) émis par les émetteurs de lumière (20), et
- un circuit de lecture (18, 19) pour la lecture des signaux de ladite au moins une unité réceptrice de lumière (10),
**caractérisé par**
un moyen d'évaluation (18, 19) qui est conçu pour subdiviser la surface de ladite au moins une unité réceptrice de lumière (10) en fonction d'un critère de sélection prédéterminé en au moins deux zones de travail (16), et poursuivre le traitement des signaux desdites au moins deux zones de travail de manière différente.

2. Système de sécurité optoélectronique selon la revendication 1, **caractérisé en ce que**
- ladite au moins une unité réceptrice de lumière à résolution locale comprend une matrice de photodiodes (10) monodimensionnelle ou bidimensionnelle avec des éléments (12) photosensibles agencés en forme de matrice, en particulier des éléments à CCD, et
- le circuit de lecture est relié aux éléments individuels (12) de la matrice de photodiodes (10) pour la lecture des signaux des éléments.

3. Système de sécurité optoélectronique selon la revendication 2, **caractérisé en ce que** le moyen d'évaluation (18, 30) est conçu de telle manière qu'il est capable d'associer des éléments individuels (12) de la matrice de photodiodes (10) à différentes zones de travail (16).

4. Système de sécurité optoélectronique selon la revendication 3, **caractérisé en ce que** l'unité d'évaluation (18, 30) comprend une unité de sommation qui est capable d'additionner les signaux des éléments (12), associés à une zone de travail (16), de la matrice de photodiodes (10) pour donner un signal de zone, en particulier d'additionner le courant des photodiodes individuelles de la zone de travail pour donner un courant total.

5. Système de sécurité optoélectronique selon la revendication 1, **caractérisé en ce que** ladite au moins une unité réceptrice de lumière à résolution locale comprend un détecteur sensible à la position.

6. Système de sécurité optoélectronique selon la revendication 5, **caractérisé en ce que** l'unité d'évaluation comprend une unité d'addition/intégration, qui est capable d'additionner/intégrer le signal d'une zone de travail sur la surface de la zone de travail pour donner un signal de zone.

7. Système de sécurité optoélectronique selon l'une des revendications 4 ou 6, **caractérisé en ce que** l'unité d'évaluation (18, 30) comprend un moyen de comparaison pour comparer les signaux de zone de zones de travail individuelles les uns avec les autres.

8. Système de sécurité optoélectronique selon l'une des revendications 1 à 7, **caractérisé en ce qu'**une propre unité réceptrice de lumière (10) à résolution locale est associée à chaque émetteur de lumière (20) de l'agencement en grille lumineuse (22).

9. Système de sécurité optoélectronique selon l'une des revendications 1 à 7, **caractérisé en ce qu'**une unité réceptrice de lumière à résolution locale commune est associée à plusieurs émetteurs de lumière, de préférence à tous les émetteurs de lumière, de l'agencement en grille lumineuse.

10. Procédé d'orientation pour un système de sécurité optoélectronique selon l'une des revendications 1 à 9, dans lequel, pendant une phase d'orientation, on émet avec les émetteurs de lumière (20) de l'agencement en grille lumineuse (22) en l'absence d'objet perturbateur dans la zone de surveillance (26), des signaux lumineux (24) vers ladite au moins une unité réceptrice de lumière (10), et en fonction d'un critère de sélection prédéterminé - en particulier la position et/ou la forme et/ou la surface des signaux lumineux reçus au niveau de l'unité réceptrice de lumière (10) - on détermine des zones de travail différentes.

11. Procédé d'orientation selon la revendication 10, dans lequel au moins celles des parties d'une unité réceptrice de lumière (10) à résolution locale qui sont atteintes par un signal lumineux (14) d'une unité émettrice de lumière sont associées à une zone de travail commune (16).

12. Procédé d'orientation selon la revendication 10, dans lequel au moins celles des parties d'une unité réceptrice de lumière à résolution locale qui entourent ou qui limitent un signal lumineux reçu depuis unité émettrice de lumière sont associées à une zone de travail commune.

13. Procédé d'orientation selon l'une des revendications 10 à 12, dans lequel on détermine différentes zones de travail de telle manière qu'elles correspondent à des angles d'acceptance différents de ladite au moins une unité réceptrice de lumière (10).

14. Procédé pour le fonctionnement d'un système de sécurité optoélectronique selon l'une des revendications 1 à 9, qui a été orienté avec un procédé d'orientation selon l'une des revendications 10 à 13, dans lequel pendant une phase de surveillance on émet avec les émetteurs de lumière (20) de l'agencement en grille lumineuse (22) des signaux lumineux (24) dans la zone de surveillance (26) vers ladite au moins unité réceptrice de lumière (10) à résolution locale.

15. Procédé selon la revendication 14, dans lequel les signaux lumineux provenant d'une zone de travail sont additionnés ou intégrés afin de former un signal de zone de la zone de travail respective (16).

16. Procédé selon la revendication 15, dans lequel les signaux de zone provenant de zones de travail individuelles (16) sont comparés.

17. Procédé selon l'une des revendications 15 ou 16, dans lequel les rapports ou les différences des signaux de zone provenant de zones de travail individuelles sont formé(e)s.

18. Procédé selon la revendication 17, dans lequel les signaux de deux zones sont pondérés avant la formation de rapports ou respectivement la formation de différences.

19. Procédé selon l'une des revendications 14 à 18, dans lequel la surface de la tache lumineuse sur ladite au moins une unité réceptrice de lumière (10) qui est engendrée par l'incidence d'un signal lumineux (24) est surveillée.

20. Procédé selon l'une des revendications 14 à 19, dans lequel des zones de travail qui correspondent à des angles d'acceptance différents de ladite au moins une unité réceptrice de lumière (10) sont surveillées.
